# DEMANDE DE BREVET EUROPEEN

(11) **EP 0 778 717 A1**
(43) Date de publication de la demande: **11.06.1997**
(21) Numéro de dépôt: 96402530.8
(22) Date de dépôt: 25.11.1996
(51) Int. Cl.: H04Q 7/38

(54) **Protocole d'acheminement d'appels entrants du réseau téléphonique commuté dans un réseau cellulaire**

(30) Priorité: 28.11.1995 FR 9514080
(71) Demandeur: FRANCE TELECOM, 75015 Paris (FR)
(72) Inventeur: Despres, François, 91570 Bievres (FR); Blondeau, Olivier, 78120 Rambouillet (FR); Desseignes, Christophe, 94360 Bry sur Marne (FR)
(74) Mandataire: Fréchède, Michel

(57) **Abrégé**

L'invention concerne un protocole d'acheminement d'appels entrants d'un combiné du réseau téléphonique public vers un réseau cellulaire.

Il consiste à attribuer à chaque borne fixe radio (BFRᵢⱼ) des coordonnées d'adresse géographique, associer à ces bornes un paramètre de groupement de l'unité de raccordement URBⱼ correspondant, établir pour chaque borne BFRᵢⱼ un périmètre de voisinage d'au moins une borne fixe radio, interconnectée ou non à la même URBⱼ. Sur demande d'appel entrant, vers un abonné mobile (ERR), il consiste ensuite à déterminer, à partir du numéro d'annuaire abonné mobile, l'adresse géographique de la BFRᵢⱼ de localisation, discriminer par critère de distance l'ensemble des BFRᵢⱼ voisines de la borne de localisation, transmettre à partir de la borne de localisation puis le cas échéant de chaque borne voisine une invitation à répondre à l'ERR pendant un temps déterminé.

Application à la gestion des réseaux de téléphonie cellulaire.

## Description

A l'heure actuelle, les réseaux de téléphonie cellulaire sont en plein développement.

Une raison de leur essor est, outre l'accès auprès d'abonnés de ce type de réseau, l'accès de manière sensiblement transparente auprès d'abonnés du réseau téléphonique public commuté, et réciproquement.

Contrairement au réseau téléphonique public commuté, un réseau de téléphonie cellulaire est constitué, ainsi que représenté en figure la, par au moins un émetteur-récepteur radio ERR, par abonné mobile, en liaison hertzienne avec une pluralité de bornes fixes radio BFR, interconnectées en structure arborescente par des unités de raccordement de bornes URB à un centre d'authentification d'abonné mobile CAP, l'ensemble constituant le réseau de téléphonie cellulaire proprement dit.

L'interconnexion entre le combiné téléphonique CTA d'un abonné du réseau téléphonique public commuté RTPC est assurée par une unité d'accès au réseau de téléphonie mobile (UAP).

Dans les réseaux de téléphonie cellulaire actuels, tel que le réseau de téléphonie cellulaire POINTEL en Europe, une procédure ou protocole d'acheminement d'appels entrants sur le réseau de téléphonie cellulaire, en provenance du réseau téléphonique public commuté, met en oeuvre des opérations spécifiques, rendues nécessaires en raison de la configuration même du réseau de téléphonie cellulaire.

En premier lieu, le protocole précité nécessite, de manière classique, une procédure de localisation de chaque abonné mobile dans le réseau de téléphonie mobile.

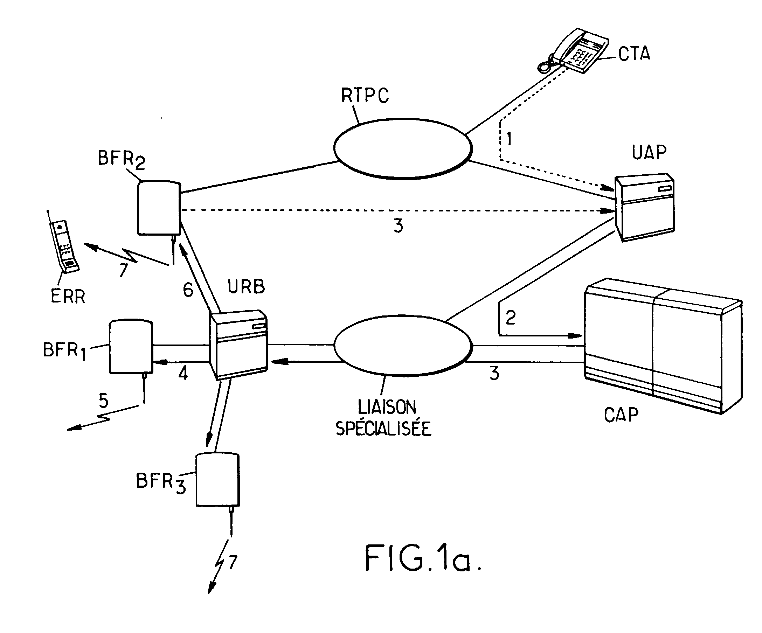

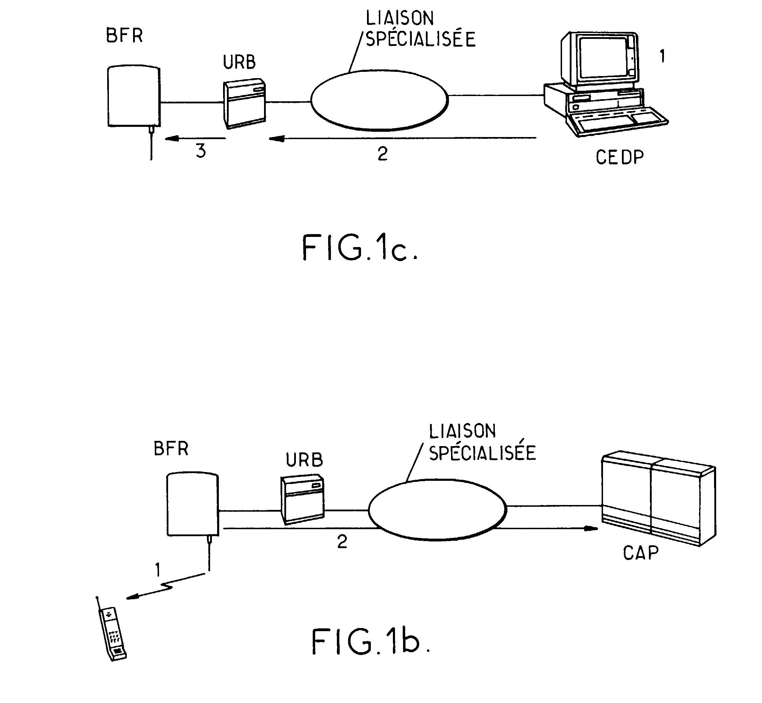

On rappelle, en liaison avec la figure 1b, qu'une telle procédure implique successivement :
- l'envoi par l'abonné mobile d'une requête 1 de localisation ;
- la transmission 2 via la BFR, l'URB concernée et un réseau de ligne de transmission spécialisée de cette requête vers le centre d'authentification d'abonné mobile CAP ;
- la vérification des droits d'accès, puis la mémorisation, par le CAP, de l'adresse réseau ou identité de la borne BFR identifiée comme borne de localisation, afin de permettre à ce dernier d'acheminer tout appel entrant ultérieur vers cet abonné mobile.

Lors de l'apparition d'un tel appel entrant, celui-ci, en référence à la figure la, est géré par l'unité d'accès au réseau de téléphonie mobile UAP, à partir d'une base de données permettant de connaître toutes les bornes BFR filles, interconnectées à la même unité de raccordement de bornes, URB.

Un tel protocole de gestion d'un appel entrant est résumé ci-après en liaison avec la figure la et implique, grâce à l'émission de requêtes ou messages successifs où les lignes en pointillé représentant la transmission de messages en phonie et les lignes continues la transmission de messages par liaison spécialisée, les étapes ci-après :
1. L'ERR est supposé localisé au voisinage de la borne de localisation BFR₁. Par exemple, l'appelant du réseau téléphonique public commuté compose le numéro d'appel de l'appelé mobile, lequel est transmis vers l'UAP, constituant, au niveau de l'UAP, un premier demi-appel.
2. L'UAP indique au CAP, disposant des paramètres de localisation de l'abonné mobile appelé, qu'il existe une requête d'appel à destination de cet abonné mobile et communique au centre d'authentification d'abonné mobile CAP, l'adresse réseau de la borne de localisation et un numéro de rappel de l'abonné mobile.
3. Le CAP appelle l'URB de rattachement de la borne de localisation BFR₁ en indiquant le numéro de rappel.
4. L'URB indique à la borne de localisation BFR1 que l'émetteur-récepteur ERR de numéro de rappel correspondant de cet abonné mobile est recherché.
5. La borne de localisation BFR₁ entame une procédure de scrutation (polling en langage anglo-saxon) pour rechercher par émission de messages d'appel l'émetteur-récepteur ERR de cet abonné mobile sur la liaison hertzienne. Au bout d'un temps déterminé, de l'ordre de quelques secondes, en l'absence de réponse de l'abonné mobile concerné, la borne de localisation BFR₁ envoie à son URB de raccordement un compte-rendu négatif. La procédure d'appel de la borne de localisation constitue un deuxième demi-appel.
6 et 6'. L'URB de raccordement consulte alors le CAP pour connaître les bornes filles BFR₂, BFR₃ distinctes de la borne de localisation BFR₁ et adresse à chacune d'elles, simultanément, une requête de recherche de l'émetteur-récepteur ERR de l'abonné mobile au numéro de rappel correspondant.
7. Chaque borne fille entame une procédure de polling semblable à celle de l'étape 5 préalablement conduite par la borne de localisation, chaque appel constituant un deuxième demi-appel.
7'. Lorsqu'une borne fille BFR₂, BFR₃ a trouvé l'émetteur-récepteur de l'abonné mobile concerné, c'est-à-dire lorsqu'un message d'accusé de réception du dernier appel engendré par celle-ci est reçu en retour, cette dernière fait sonner l'émetteur-récepteur ERR pour appeler l'abonné mobile utilisateur.
8. Lorsque cet abonné-mobile utilisateur décroche son émetteur-récepteur ERR, la borne fille précitée, BFR₂ par exemple, rappelle l'UAP, via le RTCP, l'UAP procédant alors à l'aboutement des deux demi-appels.

Le protocole précité présente des inconvénients, liés essentiellement à la structure même du réseau de radiotéléphonie mobile. Parmi ces inconvénients, on peut citer en premier lieu le fait que la gestion des bornes filles se fait manuellement, lors de l'adjonction d'une ou plusieurs bornes BFR. On peut citer en deuxième lieu le fait que les bornes filles sont limitées à 5, pour une unité de raccordement URB. On peut enfin souligner un inconvénient majeur dû au fait que la déclaration des bornes voisines ne peut être effectuée que pour une même unité de raccordement URB.

Une telle procédure peut consister, ainsi que décrit en liaison avec la figure 1c, à :
2. transmettre vers l'URB à partir d'un centre d'exploitation décentralisé du réseau cellulaire, noté CEDP, les données de fonctionnement contenant les caractéristiques de la ou des nouvelles bornes fixes radio BFR ainsi que la liste des bornes voisines ;
3. transmettre de l'URB vers la ou les bornes ajoutées les caractéristiques et données pertinentes, l'URB conservant pour chaque borne dont elle a la charge, bornes filles, la liste des bornes voisines.

Toutefois, en fonction de la topographie réelle du réseau de téléphonie mobile, notamment du site d'implantation des bornes BFR, il n'est pas certain qu'une borne BFR voisine, au sens géographique du terme, d'une autre borne BFR puisse être déclarée borne voisine. C'est le cas lorsque deux bornes BFR, géographiquement proches, sont reliées à des unités de raccordement URB distinctes.

L'inconvénient précité ne permet donc ni la mise en oeuvre d'une recherche d'abonné mobile rationalisée, par zone géographique, ni la mise en oeuvre d'un protocole de gestion d'appels entrants permettant de tenir compte de l'évolution possible des déplacements de chaque abonné mobile, ce qui rend très difficile pour chacun de ces derniers une réduction de la fréquence des procédures de localisation et donc un allégement correspondant de l'encombrement du réseau de téléphonie mobile, du fait de la nécessité, à fréquence relativement élevée, de ces procédures de localisation.

Le protocole d'acheminement d'appels entrants du réseau téléphonique commuté dans un réseau de téléphonie mobile cellulaire, selon l'invention, a pour objet de remédier aux inconvénients précités.

Un autre objet de la présente invention est la mise en oeuvre d'un protocole d'acheminement d'appels entrants du réseau téléphonique commuté dans un réseau de téléphonie mobile cellulaire dans lequel une automatisation de la gestion des bornes voisines, bornes filles ou non d'une même unité de raccordement est réalisée.

Un autre objet de la présente invention est en outre la mise en oeuvre d'un protocole d'acheminement d'appels entrants du réseau téléphonique commuté dans un réseau de téléphonie mobile cellulaire, permettant une recherche dynamique des bornes voisines, grâce à l'attribution de coordonnées géographiques, lors de l'apparition d'un appel entrant à destination d'un abonné mobile.

Le protocole d'acheminement d'appels entrants engendrés par le combiné téléphonique d'un abonne du réseau téléphonique public commuté dans un réseau de téléphonie cellulaire est mis en oeuvre lorsque ce combiné est interconnecté à une unité d'accès au réseau téléphonique cellulaire UAP, ce réseau comportant au moins un émetteur-récepteur abonné mobile et une pluralité de bornes fixes radio BFR interconnectées en grappes, selon une structure arborescente, à des unités de raccordement et à un centre d'authentification d'abonné mobile par des lignes de transmission de données numériques spécialisées, l'unité d'accès au réseau de téléphonie cellulaire étant elle-même interconnectée au centre d'authentification d'abonné mobile par une ligne de transmission de données numériques spécialisée.

Il est remarquable en ce qu'il consiste à attribuer à chaque borne fixe radio des coordonnées d'adresse géographique, associer à chaque borne fixe radio un paramètre de groupement, adresse de l'unité de raccordement à laquelle cette borne fixe radio est interconnectée, établir pour chaque borne fixe radio un périmètre de voisinage d'au moins une borne fixe radio adjacente, interconnectée ou non à la même unité de raccordement, chaque borne fixe radio et chaque borne adjacente étant munie de ses coordonnées d'adresse géographique et de son paramètre de groupement.

Sur demande d'appel entrant d'un abonné vers un abonné mobile appelé, le protocole consiste alors à déterminer à partir du numéro d'annuaire abonné mobile appelé l'adresse géographique de la borne fixe radio sous laquelle cet abonné mobile appelé est localisé, cette borne fixe radio constituant une borne de localisation ; discriminer par critère de distance, parmi l'ensemble des bornes fixes radio du réseau de téléphonie cellulaire, l'ensemble des bornes fixes radio adjacentes placées dans le périmètre de voisinage de cette borne de localisation, l'ensemble des bornes fixes radio adjacentes formant l'ensemble des bornes voisines de la borne de localisation ; transmettre, à partir de la borne de localisation, un message d'invitation à répondre à cet abonné mobile appelé, et, en l'absence de réponse de ce dernier, transmettre à partir de chaque borne voisine une invitation à répondre à l'abonné mobile appelé, jusqu'à l'obtention de la réponse de ce dernier pendant un intervalle de temps déterminé.

Le protocole d'acheminement d'appels entrants engendrés par le combiné téléphonique d'un abonné du réseau téléphonique public commuté dans un réseau de téléphonie cellulaire, objet de l'invention, trouve application à la gestion des réseaux de téléphonie mobile lors d'un appel à partir du réseau public commuté et permet d'optimiser et d'alléger le nombre d'appels nécessaires à l'obtention de la réponse de l'abonné mobile appelé.

Il sera mieux compris à la lecture de la description et à l'observation des dessins dans lesquels, outre les figures la à lc relatives à l'art antérieur,
- la figure 2a représente un organigramme général de mise en oeuvre du protocole d'acheminement d'appels entrants du réseau téléphonique commuté dans un réseau cellulaire de téléphonie mobile conforme à l'objet de la présente invention ;
- la figure 2b représente, à titre illustratif, un mode de réalisation spécifique du protocole d'acheminement d'appels entrants conforme à l'objet de la présente invention ;
- la figure 3a et la figure 3b représentent chacune une variante de réalisation du protocole d'acheminement d'appels entrants, objet de l'invention tel qu'illustré en figure 2a ou 2b ;
- la figure 4 représente un exemple spécifique de la séquence des différents messages, support des requêtes, permettant la mise en oeuvre du protocole d'acheminement d'appels entrants objet de la présente invention ;
- les figures 5a et 5b représentent la structure qualitative des messages transmis permettant la mise en oeuvre du protocole d'acheminement d'appels entrants, objet de la présente invention.

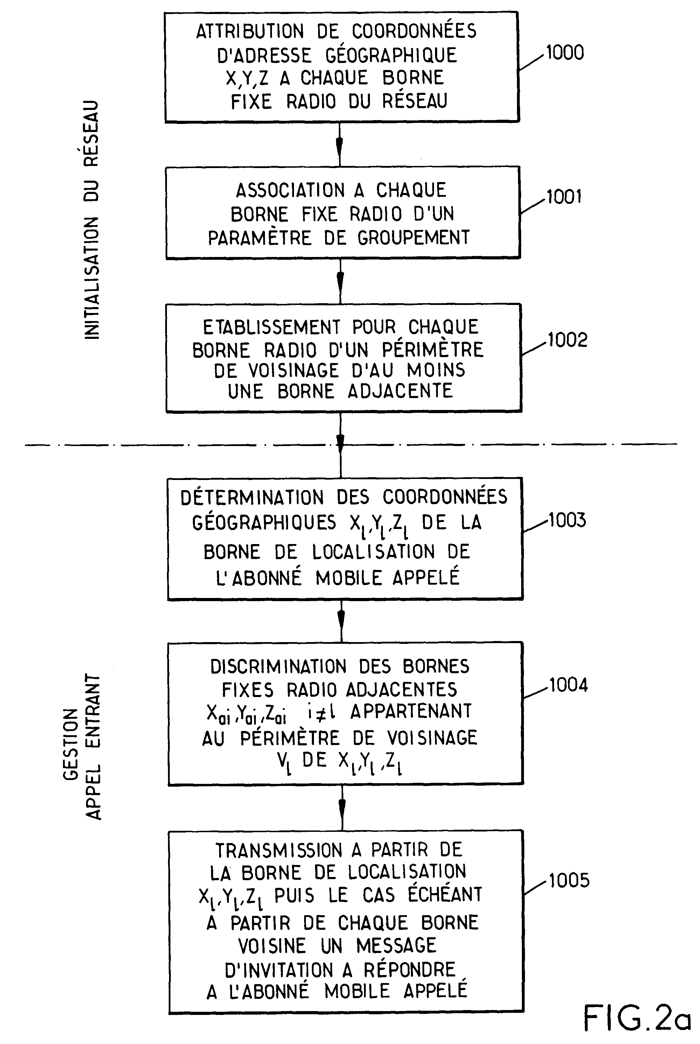

Une description plus détaillée du protocole d'acheminement d'appels entrants engendrés par le combiné téléphonique d'un abonné du réseau téléphonique public commuté dans un réseau de téléphonie cellulaire conforme à l'objet de la présente invention sera maintenant donnée en liaison avec la figure 2a relative à un organigramme général du protocole précité.

D'une manière générale, on indique que le combiné téléphonique de l'abonné du réseau téléphonique public commuté est interconnecté à une unité d'accès au réseau téléphonique cellulaire notée UAP sur la figure la, le réseau téléphonique public commuté étant désigné par RTCP.

Le réseau téléphonique cellulaire comporte au moins un émetteur-récepteur abonné mobile, référencé ERR sur la même figure la, et une pluralité de bornes fixes radio notées BFR₁ à BFR₃ sur la même figure la précitée, ces bornes fixes radio étant interconnectées en grappes selon une structure arborescente à des unités de raccordement URB et à un centre d'authentification d'abonné mobile noté CAP par l'intermédiaire de lignes de transmission de données numériques spécialisées. On indique à titre indicatif que les lignes de transmission de données numériques spécialisées peuvent être constituées par des lignes de transmission de données par paquets, par exemple. En outre, l'unité d'accès au réseau de téléphonie cellulaire UAP est elle-même interconnectée au centre d'authentification d'abonné mobile CAP par une ligne de transmission de données numériques spécialisée, par exemple.

D'une manière générale, on rappelle également que le centre d'authentification d'abonné mobile CAP peut être unique au niveau national ou au niveau d'un Etat déterminé d'une zone continentale de réseau de téléphonie mobile et que l'unité d'accès au réseau de téléphonie cellulaire UAP présente un rayon d'action régional pour une région déterminée de cet Etat ou pays. En outre, chaque unité de raccordement est relative, dans une région déterminée précitée, à une zone spécifique dans laquelle le réseau de téléphonie mobile cellulaire est particulièrement développé, cette zone comportant une pluralité de bornes fixes radio filles interconnectées à une cellule de raccordement URB correspondante.

Ainsi qu'on l'a représenté en figure 2a, on indique que le protocole d'acheminement d'appels entrants, objet de la présente invention, comporte une phase d'initialisation du réseau et une phase de gestion d'appels entrants proprement dite.

Ainsi qu'on l'observera sur la figure 2a précitée, la phase d'initialisation du réseau comprend une étape notée 1000 consistant à attribuer à chaque borne fixe radio des coordonnées d'adresse géographique déterminées. Les coordonnées d'adresse géographique sont des coordonnées de type X, Y, Z par rapport à un point de référence, la coordonnée Z pouvant, le plus souvent, être supprimée dans tous les cas classiques.

L'étape 1000 précitée est suivie d'une étape 1001 consistant à associer à chaque borne fixe radio un paramètre de groupement, ce paramètre de groupement pouvant consister par exemple en l'adresse réseau de l'unité de raccordement URB à laquelle cette borne fixe radio est interconnectée.

L'étape 1001 précitée est alors suivie d'une étape 1002 consistant à établir pour chaque borne fixe radio un périmètre de voisinage d'au moins une borne fixe radio adjacente, interconnectée ou non à la même unité de raccordement URB. Chaque borne fixe radio et chaque borne adjacente est munie de ses coordonnées d'adresse géographique et de son paramètre de groupement. L'étape 1002 précitée termine l'étape d'initialisation du réseau, chaque borne fixe radio du réseau cellulaire à la fin de cette étape d'initialisation étant ainsi dotée d'un paramètre de groupement, d'un périmètre de voisinage d'au moins une borne adjacente et bien entendu de coordonnées d'adresse géographique spécifiques.

L'étape de gestion d'appels entrants proprement dite est alors initialisée sur demande d'appels entrants d'un abonné mobile par un abonné RTPC.

Bien entendu, on suppose de manière non limitative que lors de l'occurrence d'une demande d'appel entrant de l'abonné mobile précité, celui-ci a préalablement satisfait à la procédure de localisation, ainsi que décrit précédemment dans la description. On rappelle que cette procédure de localisation permet de déterminer d'une part, l'adresse réseau de la borne fixe radio sous laquelle la procédure de localisation a été conduite ainsi que, d'autre part, l'adresse réseau de l'unité de raccordement URB à laquelle cette borne fixe radio constituant borne fille est interconnectée.

L'étape de gestion d'appel entrant proprement dite consiste alors ainsi que représenté en figure 2a à effectuer une étape 1003 de détermination des coordonnées géographiques X₁, Y₁, Z₁ de la borne de localisation de l'abonné mobile appelé, cette borne fixe radio constituant la borne de localisation précitée.

L'étape 1003 précédente est alors suivie d'une étape 1004 consistant à discriminer, par critère de distance parmi l'ensemble des bornes fixes radio du réseau de téléphonie cellulaire, l'ensemble des bornes fixes radio adjacentes placées dans le périmètre de voisinage de cette borne de localisation. Chaque borne fixe radio adjacente de l'ensemble des bornes fixes de radio adjacente précitées porte les coordonnées géographiques indiquées par Xₐᵢ, Yₐᵢ, Zₐᵢ pour i ≠ 1 précédemment mentionné où 1 désigne l'indice des coordonnées X₁, Y₁, Z₁, relatives à la borne fixe radio de localisation.

L'ensemble des bornes fixes radio adjacentes Xₐᵢ, Yₐᵢ, Zₐᵢ forme l'ensemble des bornes voisines de la borne de localisation de coordonnées X₁, Y₁, Z₁.

On indique que l'opération de discrimination par critère de distance de l'ensemble des bornes fixes radio de téléphonie cellulaire adjacentes constituant les bornes voisines de la borne de localisation est réalisée au niveau du centre d'authentification d'abonné mobile CAP. D'une manière générale, on indique que cette opération de discrimination peut être réalisée par un critère de tri à partir d'un logiciel de calcul de la distance de chaque borne susceptible de constituer une borne voisine par rapport à la borne de localisation et de comparaison de cette distance géométrique à une valeur de seuil ou à une plage de valeurs de seuil, par exemple.

On comprend ainsi que le logiciel précité permet alors d'élaborer une liste des bornes voisines de la borne de localisation précitée. Ces bornes voisines couvrent un espace au voisinage de la borne de localisation, espace dans lequel l'abonné mobile a pu se déplacer entre l'instant auquel l'abonné mobile a procédé à sa dernière localisation et où la borne de localisation a été ainsi mise en évidence et l'instant de l'occurrence de la demande d'appel entrant pour l'abonné mobile précité.

L'étape de gestion d'appels entrants proprement dite, telle que représentée en figure 2a, est alors suivie suite à l'étape 1004 précitée d'une étape 1005 de transmission, à partir de la borne de localisation de coordonnées géographiques X₁, Y₁ et Z₁, puis, le cas échéant, à partir de chaque borne voisine Xₐᵢ, Yₐᵢ Zₐᵢ d'un message d'invitation à répondre à l'abonné mobile appelé, cette étape portant la référence 1005 sur la figure 2a.

On comprend bien sûr que l'étape 1005 précitée peut être subdivisée en diverses sous-étapes, notamment lorsque suite à la transmission du message d'invitation à répondre à partir de la borne de localisation, aucune réponse de l'abonné mobile appelé n'est obtenue dans un temps déterminé, une procédure de transmission de ce même message ou d'un message semblable à partir des bornes voisines pouvant alors être initiée dans des conditions qui seront décrites de manière plus détaillée ultérieurement dans la description.

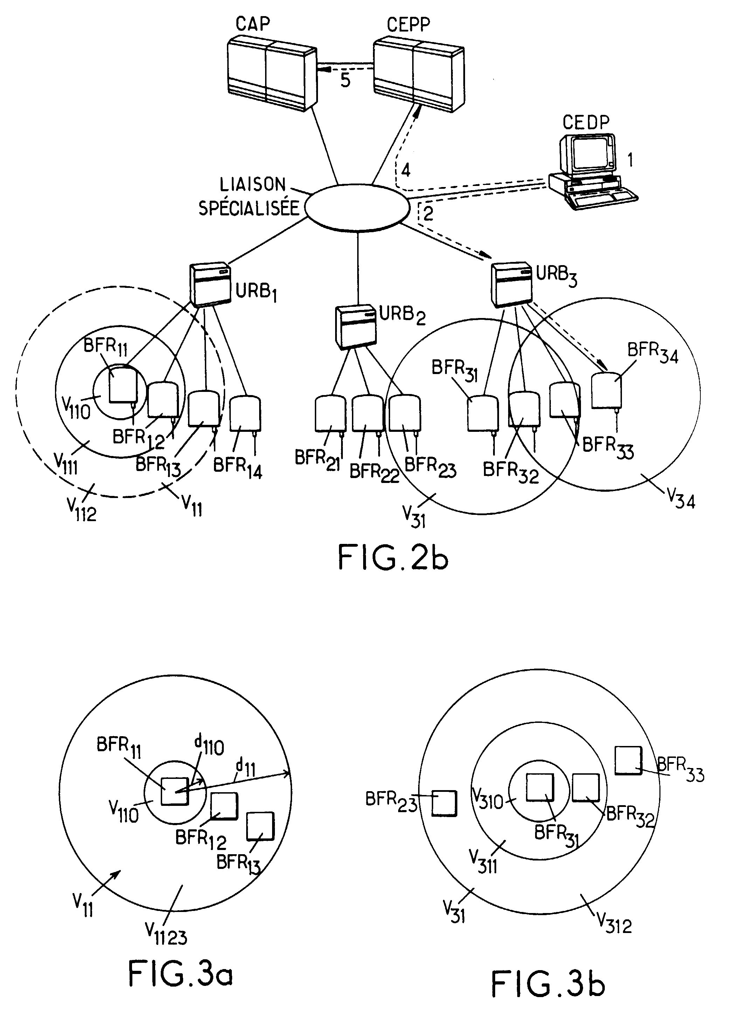

Différents modes de réalisation particuliers du protocole d'acheminement d'appels entrants conforme à l'objet de la présente invention seront maintenant donnés en liaison avec la figure 2b en référence à un schéma général de réseau cellulaire interconnecté au réseau téléphonique public commuté.

Sur la figure 2b précitée, outre les éléments représentés en figure la, on a représenté de manière schématique un centre d'exploitation principal du réseau cellulaire, noté CEPP, et un centre d'exploitation décentralisé du réseau cellulaire noté CEDP, les deux centres précités étant interconnectés par l'intermédiaire d'une liaison spécialisée ainsi que mentionné précédemment dans la description.

Sur ce même réseau, tel que représenté en figure 2b et pour les besoins de la présente description, on a représenté trois unités de raccordement portant les références URB₁, URB₂ et URB₃.

Par convention et pour simplifier les notations, chaque borne fixe radio fille est notée BFRᵢⱼ où ᵢ reprend la valeur de l'indice de l'unité de raccordement URBᵢ à laquelle chaque borne fixe est interconnectée et où l'indice j indique un numéro d'identification de la borne fixe radio correspondante, l'unité de raccordement URB₁ comportant ainsi par exemple 4 bornes fixes radio référencées BFR₁₁ à BFR₁₄, l'unité de raccordement URB₂ comportant trois bornes fixes radio référencées BFR₂₁ à BFR₂₃ et l'unité de raccordement URB₃ comportant également quatre bornes fixes radio référencées BFR₃₁ à BFR₃₄.

D'une manière générale, on indique que le périmètre de voisinage de chaque borne de localisation, toute borne fixe radio pouvant constituer une borne fixe de localisation, est représenté par exemple par un cercle, ou une couronne circulaire, le cas échéant une portion de sphère ou une couronne sphérique, dont les centres sont situés au voisinage de la borne fixe radio de localisation.

Ainsi, pour la borne fixe radio BFR₁₁, on indique que celle-ci peut être dotée d'un périmètre de voisinage correspondant à un cercle ou une demi-sphère noté V₁₁ ou le cas échéant, d'une pluralité de couronnes concentriques notées V₁₁₀, V₁₁₁, V₁₁₂, par exemple.

Bien que les périmètres de voisinage pour les bornes fixes radio successives des unités de raccordement URB₁, URB₂ et URB₃ ne soient pas représentés, on conçoit aisément que les bornes fixes radio précitées sont dotées d'un périmètre de voisinage défini de manière semblable.

On comprend également que le périmètre de voisinage est spécifique à une borne fixe radio déterminée, ce périmètre de voisinage pouvant alors être établi en fonction de critères relatifs à la topographie du réseau dans une zone de réseau déterminée, en fonction des caractéristiques d'implantation radioélectrique de ce dernier.

En ce qui concerne la définition des bornes voisines, on constate, à l'observation de la figure 2b par exemple, à titre d'exemple non limitatif, que pour la borne fixe radio BFR₁₁, lorsque celle-ci est désignée comme borne de localisation, les bornes fixes radio BFR₁₂ et BFR₁₃ peuvent, par exemple, être discriminées comme bornes voisines lorsque le périmètre de voisinage correspond par exemple au périmètre de voisinage V₁₁₁, respectivement V₁₁₂ ou V₁₁. On constate que dans ce cas, les bornes voisines sont constituées par des bornes filles de la même unité de raccordement URB₁.

Toutefois, et en fonction des impératifs d'exploitation du réseau et ainsi que représenté en figure 2b, lorsque la borne fixe radio BFR₃₁ est désignée comme borne de localisation, pour un périmètre de voisinage V₃₁, on constate alors que la borne fixe radio BFR₂₃ appartenant à ce périmètre de voisinage est alors désignée comme borne voisine, bien que elle n'appartienne pas à la même unité de raccordement URB₃, avec les bornes fixes radio BFR₃₂ et BFR₃₃ elles-mêmes raccordées à l'unité de raccordement URB₃, alors que la borne fixe radio BFR₃₄, raccordée à cette même unité de raccordement URB₃ n'appartient pas à l'ensemble des bornes voisines de la borne fixe radio BFR₃₁.

Ainsi, le périmètre de voisinage pour chaque borne fixe radio, voisinage d'au moins une borne fixe radio adjacente, peut être choisi par valeur constante et modulé en fonction de la topographie du réseau.

En référence aux figures 3a et 3b, on indique également que ce périmètre de voisinage peut être choisi par valeurs discrètes successives, valeur discrète notée V₁₁₀ pour une distance d₁₁₀ donnée, V₁₁ pour une distance d₁₁ supérieure donnée et V₁₁₂₃ pour un périmètre de voisinage couronne circulaire correspondant à la différence des distances d₁₁ et d₁₁₀, ainsi que représenté sur la figure 3a, ou en une pluralité de valeurs discrètes successives notées V₃₁₀, V₃₁₁, V₃₁₂ constituant un périmètre de voisinage V₃₁, par réunion, pour la borne BFR₃₁ et les bornes voisines BFR₂₃, BFR₃₂ et BFR₃₃, ainsi que représenté sur la figure 3b. Les zones ou périmètres de voisinage précités peuvent présenter un certain degré de recouvrement.

Compte tenu de l'agencement des périmètres de voisinage précités, on indique que l'étape 1005 consistant à transmettre à partir de chaque borne voisine une invitation à répondre à l'abonné mobile appelé peut être effectuée simultanément à partir de toutes les bornes voisines situées dans un périmètre de voisinage donné, les bornes BFR₁₂ et BFR₁₃ de la figure 3a ou les bornes BFR₂₃ et BFR₃₃ de la figure 3b par exemple.

En outre, la même étape consistant à transmettre à partir de chaque borne voisine l'invitation à répondre à l'abonné mobile appelé peut être effectuée successivement pour une suite de valeurs discrètes successives correspondant chacune à une zone sensiblement concentrique à la borne de localisation. C'est par exemple le cas de la figure 3b pour laquelle il est possible d'effectuer la transmission d'invitation à répondre à l'abonné mobile appelé pour le périmètre de voisinage V₃₁₀, puis pour le périmètre de voisinage V₃₁₁ et ensuite pour le périmètre de voisinage V₃₁₂. L'étape de transmission dans chaque borne voisine appartenant à chaque zone concentrique peut alors être maintenue pendant une durée déterminée.

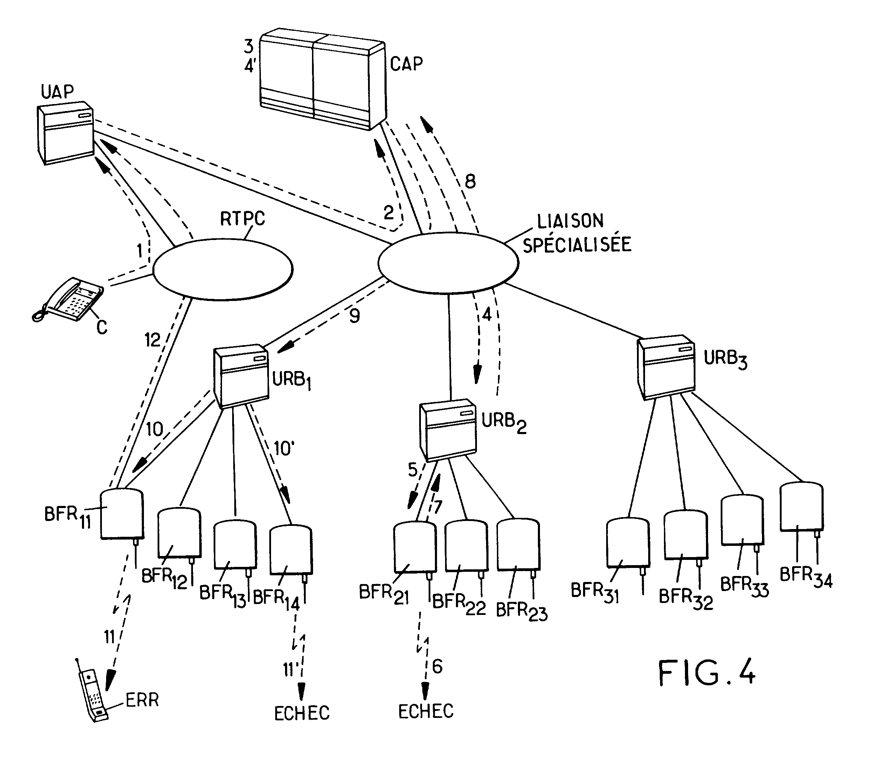

Le protocole d'acheminement d'appels entrants, objet de la présente invention, sera maintenant décrit en liaison avec la figure 4 reprenant les éléments essentiels de la figure la relative au réseau et de la figure 2a, organigramme du protocole proprement dit.

Lors d'une demande d'appel entrant, un abonné du réseau RTPC, à partir d'un combiné C, appelle un abonné mobile doté d'un émetteur-récepteur ERR, localisé sur le réseau de téléphonie cellulaire. Le combiné C adresse un message 1 vers l'unité d'accès au réseau cellulaire UAP.

L'UAP indique alors au centre d'authentification d'abonné mobile CAP, par l'intermédiaire d'un message 2, qu'un appel à destination d'un abonné mobile est en instance.

Dans une étape interne 3, le centre d'authentification d'abonné mobile CAP détermine sur quelle borne est localisé l'abonné mobile demandé, celui-ci ayant bien entendu procédé à une procédure de localisation ainsi que mentionné précédemment dans la description.

Après détermination de la borne de localisation, X₁, Y₁, Z₁, le centre d'authentification d'abonné mobile CAP appelle l'unité de raccordement URB pertinente, URB₁ sur la figure 4 à laquelle la borne de localisation, la borne BFR₂₁, par exemple, est raccordée.

Pendant la transmission de cet appel, en une étape interne 4', le centre d'authentification mobile CAP recherche l'identité des bornes voisines à la borne de localisation précitée. Cette étape, on le rappelle, est mise en oeuvre, grâce au logiciel précédemment mentionné dans la description par comparaison des coordonnées des bornes fixes radio précitées aux valeurs de distance définissant le périmètre de voisinage.

L'unité de raccordement URB₂ pertinente indique à la borne de localisation BFR₂₁ qu'il existe une demande d'appel pour l'ERR précédemment localisé. La borne de localisation BFR₂₁ en une étape 6 envoie les messages d'invitation à répondre à l'ERR correspondant.

Dans l'hypothèse où l'abonné mobile s'est déplacé, ce dernier s'étant déplacé par exemple au voisinage de la borne BFR₁₁, la borne de localisation BFR₂₁ indique à son unité de raccordement de rattachement URB₂ que l'ERR n'a pas été trouvé.

Dans une étape 8, l'unité de raccordement précitée URB₂ indique au centre d'authentification d'abonné mobile CAP que l'ERR appelé n'a pas été trouvé.

Dans une étape 9, le centre d'authentification CAP, par l'intermédiaire de la liaison spécialisée, appelle par exemple toutes les unités de raccordement dont les bornes sont voisines de la borne de localisation, par exemple la borne de raccordement URB₁ sur la figure 4.

Dans une étape 10 et 10', les bornes fixes voisines, par exemple la borne fixe BFR₁₁ et la borne fixe BFR₁₄ recherchent l'ERR appelé. La borne fixe radio BFR₁₄ ne trouve pas l'ERR appelé à l'étape 11' alors qu'à l'étape 11, la borne fixe radio BFR₁₁ trouve l'ERR appelé et le fait sonner.

En une étape 12, la borne fixe radio BFR₁₁, par l'intermédiaire du réseau téléphonique public commuté, par exemple, rappelle l'unité d'accès au réseau cellulaire UAP, laquelle aboute les deux demi-appels.

En ce qui concerne la déclaration d'une nouvelle borne dans le réseau et l'attribution à cette borne de coordonnées géographiques X, Y, Z, on indique, en liaison par exemple avec la figure 2b, que les opérations suivantes peuvent être réalisées :
- 1. opération de déclaration de la borne considérée et de ses coordonnées géographiques précitées au niveau du centre d'exploitation décentralisé du réseau téléphonique cellulaire noté CEDP, cette opération consistant en l'introduction des coordonnées géographiques précitées à partir d'un outil cartographique consistant, par exemple, en un logiciel de cartographie de type micro-ordinateur, permettant de saisir sur un fond de carte numérisée l'emplacement de chaque borne fixe radio. Les coordonnées géographiques X, Y et le cas échéant, Z, sont calculées alors automatiquement par le logiciel précité.
- 2. les données de fonctionnement pour chaque borne fixe radio correspondante sont alors transmises à l'unité de raccordement URB pertinente à laquelle la borne fixe radio est interconnectée en qualité de borne fille. Il s'agit sur la figure 2b de la borne d'unité de raccordement URB₃, par exemple.
- 4. envoi au centre d'exploitation principal du réseau de téléphonie mobile cellulaire, noté CEPP sur la figure 2b, d'une mise à jour de l'état du parc des bornes fixes radio constituant le réseau cellulaire, ces données comportant par exemple les données relatives à la nouvelle borne fixe radio avec son unité de raccordement URB₃ de rattachement ainsi que, bien entendu, les coordonnées géographiques de la borne considérée.
- 5. le nouvel état du parc comprenant la nouvelle borne, la borne BFR₃₄ mentionnée précédemment, est alors transmis au centre d'authentification d'abonné mobile CAP, les données correspondantes comprenant la nouvelle borne avec son unité de raccordement URB₃ de rattachement ainsi que les coordonnées géographiques X, Y, Z de la borne, la borne fixe radio BFR₃₄ ainsi que mentionné précédemment.

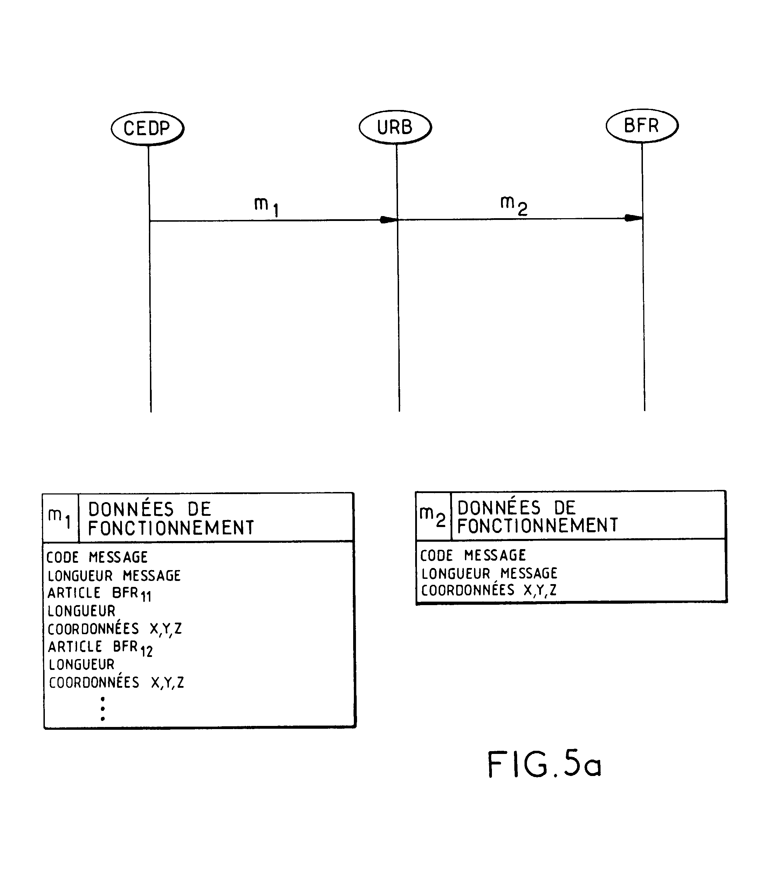

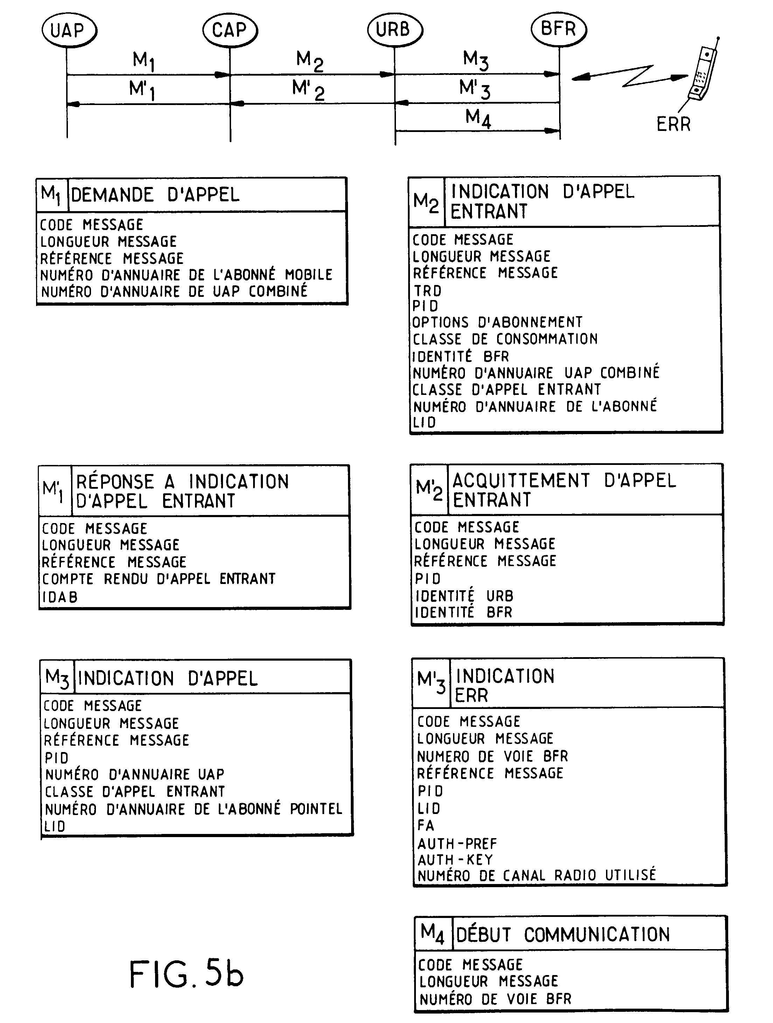

Une description qualitative de la structure des messages utilisés pour la mise en oeuvre du protocole d'acheminement d'appels entrants, objet de la présente invention, sera maintenant donnée en liaison avec la figure 5a et la figure 5b.

Sur la figure 5a, on a décrit la forme des messages utilisés pour assurer, par exemple, la déclaration d'une nouvelle borne selon les étapes décrites précédemment en liaison avec la figure 2b.

A titre d'exemple non limitatif, on indique que le message noté m₁ est relatif à la transmission des données de fonctionnement entre le centre d'exploitation décentralisé du réseau téléphonique mobile CEDP et l'unité de raccordement pertinente URB₃ précédemment mentionnée.

Ce message comprend différents champs, chaque champ correspondant à une ligne mentionnée à la figure 5a. Ainsi ce message m₁ comprend les champs ci-après :
- code message,
- longueur message,
- articles relatifs la borne fixe radio concernée, la borne BFR₁₁, par exemple ou une autre,
- un champ longueur, et
- un champ coordonnées géographiques X, Y, Z relatif à la borne dont l'article est mentionné.

Les trois derniers champs précités sont répétitifs pour chaque borne, c'est-à-dire la borne BFR₁₂, par exemple, et ainsi de suite pour toutes les bornes concernées.

Le message m₂ concerne la transmission des données de fonctionnement entre l'unité de raccordement pertinente, la borne URB₃, par exemple et la borne fixe radio concernée, la borne BFR₃₄ précédemment mentionnée par exemple.

Le message m₂, relatif aux données de fonctionnement, comprend les champs ci-après :
- code message,
- longueur message,
- coordonnées X, Y, Z de la borne fixe radio pertinente précitée.

Enfin, en ce qui concerne les messages utilisés pour la mise en oeuvre de la gestion proprement dite d'un appel entrant selon le protocole, objet de la présente invention, la forme structurelle de ces messages est représentée en figure 5b.

Sur la figure 5b, par convention arbitraire, on indique que les messages transmis d'un point à un autre du réseau portent une référence Mᵢ alors que des messages transmis de l'autre point au point initial de ce même réseau portent les références M'ᵢ.

Ainsi que représenté sur la figure 5b, après que le combiné C de l'abonné du réseau téléphonique public commuté ait formulé sa demande auprès de l'unité d'accès au réseau cellulaire UAP à l'étape 1, cette demande étant réalisée en phonie normale, l'UAP adresse au centre d'authentification d'abonné mobile CAP à l'étape 2 un message M₁ de demande d'appel présentant la structure représentée en figure 5b.

Le message M₁ comprend les champs :
- code message,
- longueur message,
- référence message,
- numéro d'annuaire de l'abonné mobile,
- numéro d'annuaire de l'abonné du réseau téléphonique public commuté ayant actionné le combiné C.

Suite à l'émission du message M₁, le centre d'authentification d'abonné mobile CAP adresse au centre d'accès d'abonné mobile UAP un message de réponse à une indication d'appel entrant notée M'₁, constituant en quelque sorte un accusé de réception de la demande d'appel entrant. Le message M'₁ ainsi que représenté en figure 5b comprend les champs ci-après :
- code message,
- longueur message,
- référence message,
- compte-rendu d'appel entrant,
- IBAB, ce message constituant un numéro d'abonnement mobile.

Après réalisation des étapes 3 et 4' au niveau du centre d'authentification abonné mobile CAP, ainsi que mentionné précédemment dans la description, le CAP adresse à l'unité de raccordement pertinente, l'unité URB₂, par exemple, auprès de laquelle l'abonné mobile recherché a procédé à sa dernière localisation auprès d'une borne de localisation telle que la borne BFR₂₁, par exemple, un message M₂ d'indication d'appel entrant.

Le message M₂ comprend les champs ci-après :
- code message,
- longueur message,
- référence message,
- TRD, correspondant à un message indicateur du numéro d'abonné mobile,
- PID, message relatif au numéro de série du combiné mobile ou récepteur ERR,
- option d'abonnement,
- classe de consommation,
- identité de la borne fixe radio concernée, c'est-à-dire son adresse réseau,
- numéro d'annuaire de l'abonné ayant actionné le combiné C, numéro UAP,
- classe d'appel entrant,
- numéro d'annuaire de l'abonné mobile,
- LID, message consistant en un numéro d'identification de l'opérateur.

L'unité de raccordement pertinente URB₂ procède alors à l'étape 5 sur la figure 4 par transmission d'un message d'indication d'appel noté M₃ entre l'unité de raccordement précitée et la borne fixe radio de localisation. Le message M₃ comprend les champs ci-après :
- code message,
- longueur message,
- référence message,
- PID, message ou numéro de série de l'émetteur-récepteur ERR,
- numéro d'annuaire UAP relatif au combiné C demandeur,
- classe d'appel entrant,
- numéro d'annuaire de l'abonné mobile,
- LID, numéro d'identification de l'opérateur.

La borne fixe radio de localisation, la borne BFR₂₁ ayant procédé à l'étape 6 d'invitation à émettre pour l'ERR, abonné mobile recherché, et cette invitation s'étant soldée par un échec ainsi que décrit à titre d'exemple précédemment dans la description, la borne de localisation précitée procède à l'étape 7 à l'envoi d'un message M'₃ d'indication relative à l'émetteur-récepteur radio ERR de l'abonné mobile appelé.

Le message M'₃ comprend les champs :
- code message,
- longueur message,
- numéro de voie BFR concernant la voie ou canal radio utilisé,
- référence message,
- PID, message relatif au numéro de série ERR,
- LID, relatif à l'identification de l'opérateur,
- FA, relatif à l'identification du service demandé,
- AUTH-PREF, champ indiquant au réseau la fonction utilisée par l'émetteur-récepteur ERR,
- AUTH-KEY, champ d'identification des fonctions d'authentification disponibles,
- numéro de canal radio utilisé.

Le message M'₃ peut être utilisé soit en cas d'échec, dans la recherche de l'abonné mobile, soit en cas de succès de l'abonné mobile.

En cas de succès, l'unité de raccordement pertinente concernée, l'URB₁ dans l'exemple de la figure 4, permet alors d'envoyer un message de début de communication M₄, réalisant en fait l'aboutement des deux demi-appels précédemment mentionnés. Le message M₄ comprend les champs ci-après :
- code message,
- longueur de message,
- numéro de voie de la borne fixe radio ayant procédé avec succès à l'appel de l'abonné mobile.

Simultanément, l'unité de raccordement pertinente, l'unité URB₁, précédemment mentionnée, adresse au centre d'authentification d'abonné mobile CAP un message M'₂ d'acquittement d'appel entrant.

Le message M'₂ comprend les champs ci-après :
- code message,
- longueur message,
- référence message,
- PID, numéro de série du combiné mobile,
- identité de la borne de raccordement pertinente URB₁,
- identité de la borne fixe radio ayant atteint l'abonné mobile demandé avec succès.

On a ainsi décrit un protocole de gestion d'appels entrants à partir d'un réseau téléphonique public commuté dans un réseau de téléphonie cellulaire pour un abonné mobile particulièrement performant.

En particulier, on indique que le réseau de téléphonie cellulaire peut être constitué par un réseau connu sous le nom de réseau TELEPOINT, ce réseau et les conditions de transmission et d'accès à ce réseau ayant fait l'objet des normes DECT, CT2, DCS1800.

Le protocole, objet de la présente invention, est remarquable en ce qu'il permet d'assurer un système de gestion des bornes fixes radio particulièrement efficace dans la mesure où les ressources du réseau micro-cellulaire sont ainsi optimisées.

Le protocole, objet de la présente invention, est particulièrement remarquable en ce que, alors que les réseaux cellulaires de type TELEPOINT précédemment mentionnés étaient, à l'origine, uniquement destinés aux appels sortants émis par les mobiles vers les abonnés du réseau téléphonique public commuté, ceux-ci n'apparaissaient pas adaptés aux appels entrants.

En conséquence, le protocole d'acheminement d'appels entrants, objet de la présente invention, permet une amélioration sensible de la souplesse d'utilisation des réseaux de téléphonie cellulaire précités en conférant à ces derniers une transparence d'utilisation pour les utilisateurs du réseau téléphonique public commuté en permettant à ces derniers d'assurer tout type d'appel entrant.

## Revendications

1. Protocole d'acheminement d'appels entrants engendrés par le combiné téléphonique d'un abonné du réseau téléphonique public commuté dans un réseau de téléphonie cellulaire, ce combiné étant interconnecté à une unité d'accès au réseau téléphonique cellulaire (UAP), ce réseau téléphonique cellulaire comportant au moins un émetteur-récepteur abonné mobile et une pluralité de bornes fixes radio interconnectées en grappes selon une structure arborescente à des unités de raccordement (URB) et à un centre d'authentification d'abonné mobile, par des lignes de transmission de données numériques spécialisées, l'unité d'accès au réseau de téléphonie cellulaire étant elle-même interconnectée au centre d'authentification d'abonné mobile par une ligne de transmission de données numériques spécialisée, caractérisé en ce que ledit protocole consiste à :
- attribuer à chaque borne fixe radio des coordonnées d'adresse géographique ;
- associer à chaque borne fixe radio un paramètre de groupement, adresse de l'unité de raccordement à laquelle cette borne fixe radio est interconnectée ;
- établir pour chaque borne fixe radio un périmètre de voisinage d'au moins une borne adjacente, interconnectée ou non à la même unité de raccordement, chaque borne fixe radio et chaque borne adjacente étant munie de ses coordonnées d'adresse géographique et de son paramètre de groupement ; et sur demande d'appel entrant dudit abonné vers un abonné mobile appelé :
- déterminer à partir du numéro d'annuaire abonné mobile appelé l'adresse géographique de la borne fixe radio sous laquelle cet abonné mobile appelé est localisé, ladite borne fixe radio constituant une borne de localisation ;
- discriminer par critère de distance, parmi l'ensemble des bornes fixes radio du réseau de téléphonie cellulaire, l'ensemble des bornes fixes radio adjacentes placées dans le périmètre de voisinage de cette borne de localisation, l'ensemble desdites bornes fixes radio adjacentes formant l'ensemble des bornes voisines de la borne de localisation ;
- transmettre à partir de la borne de localisation un message d'invitation à répondre à cet abonné mobile appelé, et, en l'absence de réponse de ce dernier ;
- transmettre à partir de chaque borne voisine, une invitation à répondre à l'abonné mobile appelé, jusqu'à l'obtention de la réponse de ce dernier pendant un intervalle de temps déterminé.

2. Protocole selon la revendication 1, caractérisé en ce que le périmètre de voisinage pour chaque borne fixe radio d'au moins une borne fixe radio adjacente est choisi par valeurs constantes adaptées et modulées en fonction de la topographie du réseau de bornes fixes radio.

3. Protocole selon la revendication 2, caractérisé en ce que le périmètre de voisinage pour chaque borne fixe radio d'au moins une borne fixe radio adjacente est choisi par valeurs discrètes successives, chaque valeur discrète successive correspondant sensiblement, autour de la borne de localisation, à des zones sensiblement concentriques présentant un degré de recouvrement.

4. Protocole selon l'une des revendications 1 à 3, caractérisé en ce que l'étape consistant à transmettre à partir de chaque borne voisine une invitation à répondre à l'abonné mobile appelé est effectuée simultanément à partir de toutes les bornes voisines situées dans un périmètre de voisinage donné.

5. Protocole selon les revendications 3 et 4, caractérisé en ce que l'étape consistant à transmettre à partir de chaque borne voisine une invitation à répondre à l'abonné mobile appelé est effectuée successivement pour une suite de valeurs discrètes successives correspondant chacune à une zone sensiblement concentrique à la borne de localisation, l'étape de transmission dans chaque borne voisine appartenant à chaque zone concentrique étant maintenue pendant une durée déterminée.
